# FASCICULE DE BREVET EUROPEEN

(11) **EP 2 399 698 B1**
(45) Date de publication et mention de la délivrance du brevet: **18.07.2018**
(21) Numéro de dépôt: 11305797.0
(22) Date de dépôt: 23.06.2011
(51) Int. Cl.: B23B 31/02, B23B 31/117

(54) **Porte-outils muni d'un moyen d'amortissement et comportant un dispositif de prévention contre un échauffement excessif du moyen d'amortissement**
Mit einem Dämpfungsmittel und einer Vorrichtung zur Vermeidung der Überhitzung des Dämpfungsmittels ausgestatteter Werkzeugträger
Tool holder provided with a damping means and comprising a device to prevent overheating of the damping means

(30) Priorité: 28.06.2010 FR 1055169
(43) Date de publication de la demande: 28.12.2011
(73) Titulaire: SECO-E.P.B. (Société par Actions Simplifiée), 67330 Bouxwiller (FR)
(72) Inventeur: Freyermuth, Alain, 67350 PFAFFENHOFFEN (FR); Ostermann, Matthieu, 67310 ALLENWILLER (FR); Roos, Cédric, 67330 NEUWILLER LES SAVERNE (FR)
(74) Mandataire: Nuss, Laurent

(56) Documents cités:
- EP-A1- 1 084 782
- FR-A1- 2 929 868
- JP-A- 57 149 108
- US-A- 3 447 402
- US-A1- 2007 257 413
- US-A1- 2009 003 947

## Description

La présente invention concerne le domaine des accessoires des machines-outils, à commande numérique, centres d'usinage, cellules et ateliers flexibles et a pour objet un porte-outils muni d'un moyen d'amortissement et comportant un dispositif de prévention contre un échauffement excessif du moyen d'amortissement.

Les porte-outils ont tendance, du fait même de leur constitution, à vibrer, ce qui est préjudiciable à leur bon fonctionnement. Cette tendance à vibrer est d'autant plus importante que les vitesses de travail des machines-outils actuelles sont en constante augmentation.

Pour obvier à ces inconvénients il a été proposé de munir les porte-outils d'un dispositif d'amortissement des oscillations permettant une adaptation de leur rigidité aux conditions de travail.

A cet effet, on connaît actuellement, par US-A-3 447 402, FR-A-2 173 957, EP-A-0 571 490 et EP-A-1 248 692 des dispositifs consistant essentiellement en une masse d'amortissement montée dans un logement axial et maintenue dans ce dernier par action sur les extrémités.

Par ailleurs, on connaît, par FR-A-2 929 868, un porte-outils ayant les caractéristiques du préambule de la revendication indépendante 1 pourvu d'un moyen d'amortissement sous forme d'un corps allongé disposé dans un logement d'extrémité du porte-outils, ce moyen d'amortissement étant de type uniquement à absorption radiale et ses extrémités s'étendant dans le logement sans contrainte. Il est ainsi possible d'annihiler les effets vibratoires dus aux efforts de coupe et aux vitesses d'usinage avec un porte-outils de conception et de mise en oeuvre simples.

Le montage des outils de coupe sur les porte-outils s'effectue actuellement de plus en plus souvent par frettage, c'est-à-dire par chauffage préalable de l'extrémité du porte-outils recevant l'outil de coupe et par mise en place et positionnement de l'outil, généralement au moyen d'une machine automatique.

Ce montage par frettage entraîne un échauffement important de l'extrémité correspondante du porte-outils. Il en résulte que toute la partie avant dudit porte-outils est chauffée et que tous les éléments constitutifs de cette partie avant subissent une forte élévation de température. Or une telle élévation de température peut avoir des effets néfastes sur les éléments élastiques équipant la masse d'amortissement, à savoir une détérioration des caractéristiques mécaniques de ces éléments élastiques, voire une destruction de ces derniers.

La présente invention a pour but de pallier ces inconvénients en proposant un porte-outils muni d'un moyen d'amortissement, qui est protégé contre un échauffement excessif, lors du montage d'un outil par frettage.

A cet effet, le porte-outils selon la présente invention comprend les caractéristiques de la revendication indépendante 1. L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en coupe longitudinale d'un porte-outils muni d'un moyen d'amortissement et comportant un dispositif de prévention contre un échauffement excessif conforme à l'invention ;
la figure 2 est une vue analogue à celle de la figure 1 d'une première variante de réalisation de l'invention.

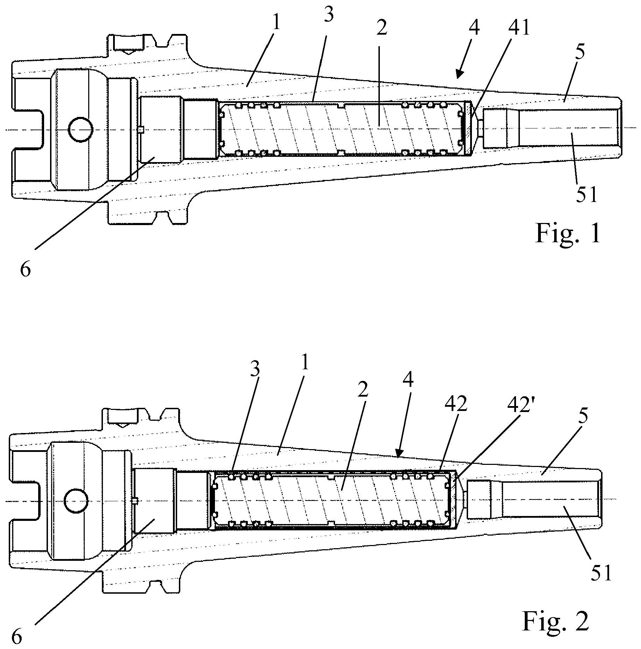

Les figures 1 et 2 des dessins annexés représentent, à titre d'exemples, un porte-outils sous forme de tête à aléser 1, qui est pourvu d'un moyen d'amortissement 2 sous forme d'un corps allongé disposé dans un logement d'extrémité 3 du porte-outils 1, de forme et de dimension correspondantes.

Conformément à l'invention, le porte-outils 1 comporte un dispositif 4 de prévention contre un échauffement excessif du moyen d'amortissement 2.

De manière connue, le corps allongé formant le moyen d'amortissement 2 est disposé dans le logement d'extrémité 3 près du manchon 5 de réception d'une tête à aléser, d'un porte-fraise ou analogue.

Dans les modes de réalisation représentés aux dessins annexés, le moyen d'amortissement 2 est de type uniquement à absorption radiale et est pourvu d'au moins un moyen élastiquement déformable, au moins près de chaque extrémité, lesdits moyens élastiquement déformables s'étendant entre l'enveloppe du moyen d'amortissement 2 et la paroi du logement 3 du porte-outils en étant serrés entre la paroi du logement 3 et le moyen d'amortissement 2.

Selon un premier mode de réalisation de l'invention, le dispositif 4 de prévention contre un échauffement excessif du moyen d'amortissement 2 est avantageusement constitué par un tampon isolant thermique 41 s'étendant devant l'extrémité du moyen d'amortissement 2 du côté de ce dernier situé près du manchon 5 de réception d'une tête à aléser, d'un porte-fraise ou analogue. Un tel tampon isolant thermique 41 peut être constitué en tout matériau présentant un coefficient élevé d'isolation, à savoir, par exemple, à base de fibres de verre noyées dans une résine ou encore à base de mica et de résine. Ainsi, lors du chauffage, en vue du frettage de l'outil préalablement centré sur le manchon 5, une part relativement importante de la chaleur dégagée est transmise au manchon 5 et par ce dernier à l'ensemble du porte-outils 1, de sorte qu'il se produit également un échauffement du logement 3 du moyen d'amortissement 2.

La prévision du tampon isolant thermique 41 formant le dispositif 4 permet d'isoler ledit logement 3 contre la chaleur provenant directement du manchon 5 et plus particulièrement de la chaleur sous forme d'air très chaud se trouvant dans le perçage central 51 dudit manchon 5.

Il s'ensuit que les éléments du moyen d'amortissement 2, à savoir les parties élastiquement déformables servant à l'amortissement sont protégées contre un échauffement trop important.

La figure 2 des dessins annexés représente une variante de réalisation de l'invention, dans laquelle le dispositif 4 de prévention contre un échauffement excessif du moyen d'amortissement 2 est constitué par un réceptacle 42 de logement du moyen d'amortissement 2, ce réceptacle étant inséré dans le logement 3 du porte-outils 1 et étant fermé par une paroi 42' au moins sur son côté tourné vers le manchon 5 de réception d'une tête à aléser, d'un porte-fraise ou analogue.

Dans ce mode de réalisation, le réceptacle 42 est également avantageusement réalisé en un matériau à haut pouvoir d'isolation thermique.

Comme le montre les figures 1 et 2 des dessins annexés, le moyen d'amortissement 2 est monté dans le logement 3 du porte-outils 1 par la face arrière de ce dernier, c'est-à-dire du côté opposé au manchon 5 de réception d'une tête à aléser, d'un porte-fraise ou analogue, et est maintenu dans ledit logement 3 par l'intermédiaire d'un bouchon 6.

Il est également possible, selon une autre caractéristique de l'invention, non représentée aux dessins annexés, de réaliser le montage du moyen d'amortissement 2 dans le porte-outils 1 par sa face avant, son maintien étant alors assuré par l'intermédiaire d'un bouchon également introduit par sa face avant.

Dans un tel cas, le bouchon de fermeture du logement 3 peut simultanément constituer un dispositif complémentaire de prévention contre un échauffement excessif du moyen d'amortissement 2.

Grâce à l'invention, il est possible de réaliser un porte-outils muni d'un moyen d'amortissement et comportant un dispositif de prévention contre un échauffement excessif dudit moyen d'amortissement permettant la mise en oeuvre d'outils frettés, tout en préservant les parties fragiles du moyen d'amortissement 2, en particulier les éléments élastiquement déformables, contre une détérioration due à la chaleur dégagée lors du frettage.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Porte-outils (1) sous forme de tête à aléser, de mandrin à pince, de porte-fraise ou analogue, muni d'un moyen d'amortissement (2) sous forme d'un corps allongé disposé dans un logement d'extrémité (3) du porte-outils (1), de forme et de dimension correspondantes et muni d'éléments élastiquement déformables montés sur le moyen d'amortissement (2) et positionnés entre l'enveloppe du moyen d'amortissement (2) et la paroi du logement (3) du porte-outils, **caractérisé en ce qu'**il comporte un dispositif (4) de prévention contre un échauffement excessif du moyen d'amortissement (2) susceptible de détériorer les éléments élastiquement déformables montés sur le moyen d'amortissement (2) lors d'une opération de montage d'un outil par frettage, le dispositif (4) de prévention contre un échauffement du moyen d'amortissement (2) étant positionné entre le moyen d'amortissement (2) et le manchon (5) du porte-outils (1) destiné à réceptionner un outil de sorte que le dispositif (4) de prévention contre un échauffement réalise un isolant thermique qui couvre entièrement le moyen d'amortissement (2) dans un plan perpendiculaire à l'axe longitudinal du porte-outil à l'extrémité du moyen d'amortissement (2).

2. Porte-outils (1), suivant la revendication 1, **caractérisé en ce que** le dispositif (4) de prévention contre un échauffement excessif du moyen d'amortissement (2) est constitué par un tampon isolant thermique (41) s'étendant devant l'extrémité du moyen d'amortissement (2) du côté de ce dernier situé près du manchon (5) de réception d'une tête à aléser, d'un porte-fraise ou analogue.

3. Porte-outils (1), suivant la revendication 1, **caractérisé en ce que** le dispositif (4) de prévention contre un échauffement excessif du moyen d'amortissement (2) est constitué par un réceptacle (42) de logement du moyen d'amortissement (2), ce réceptacle étant inséré dans le logement (3) du porte-outils (1) et étant fermé par une paroi (42') au moins sur son côté tourné vers le manchon (5) de réception d'une tête à aléser, d'un porte-fraise ou analogue.

4. Porte-outils (1), suivant l'une quelconque des revendications 1 à 3, **caractérisé en ce que** le moyen d'amortissement (2) est monté dans le logement (3) du porte-outils (1) par la face arrière de ce dernier, c'est-à-dire du côté opposé au manchon (5) de réception d'une tête à aléser, d'un porte-fraise ou analogue, et est maintenu dans ledit logement (3) par l'intermédiaire d'un bouchon (6).

5. Porte-outils (1), suivant l'une quelconque des revendications 1 à 3, **caractérisé en ce que** le moyen d'amortissement (2) est monté dans le porte-outils (1) par sa face avant, son maintien étant assuré par l'intermédiaire d'un bouchon également introduit par sa face avant.

## Patentansprüche

1. Werkzeugträger (1) in Form eines Ausdrehkopfes, eines Spannzangenfutters, einer Frässpindel oder dergleichen, mit einem Dämpfungsmittel (2) in Form eines länglichen Körpers ausgestattet, der in einer Endaufnahme (3) des Werkzeugträgers (1) mit entsprechender Form und Abmessungen angeordnet ist und mit elastisch verformbaren Teilen versehen ist, die am Dämpfungsmittel (2) angebracht und zwischen der Hülle des Dämpfungsmittels (2) und der Wand der Aufnahme (3) des Werkzeugträgers angeordnet sind, **dadurch gekennzeichnet, dass** er eine Vorrichtung (4) zur Vermeidung einer Überhitzung des Dämpfungsmittels (2) aufweist, die die elastisch verformbaren Teile, die am Dämpfungsmittel (2) angebracht sind, während des Montierens eines Werkzeuges durch Festspannen beschädigen könnte, wobei die Vorrichtung (4) zur Vermeidung einer Überhitzung des Dämpfungsmittels (2) zwischen dem Dämpfungsmittel (2) und der Hülse (5) des Werkzeugträgers (1), die dazu dient, ein Werkzeug aufzunehmen, angeordnet ist, derart dass die Vorrichtung (4) zur Vermeidung einer Überhitzung einen Wärmeisolator bildet, der das Dämpfungsmittel (2) in einer zur Längsachse des Werkzeugträgers senkrechten Ebene am Ende des Dämpfungsmittels (2) vollständig bedeckt.

2. Werkzeugträger (1) nach Patentanspruch 1, **dadurch gekennzeichnet, dass** die Vorrichtung (4) zur Vermeidung einer Überhitzung des Dämpfungsmittels (2) aus einem wärmeisolierenden Pfropfen (41) besteht, der sich vor dem Ende des Dämpfungsmittels (2) auf deren nahe der Hülse (5) zur Aufnahme eines Ausdrehkopfes, einer Frässpindel oder dergleichen gelegenen Seite befindet.

3. Werkzeugträger (1) nach Patentanspruch 1, **dadurch gekennzeichnet, dass** die Vorrichtung (4) zur Vermeidung einer Überhitzung des Dämpfungsmittels (2) aus einem Behältnis (42) zur Aufnahme des Dämpfungsmittels (2) besteht, wobei dieses Behältnis in die Aufnahme (3) des Werkzeugträgers (1) eingesetzt ist und mindestens auf der Seite, die der Hülse (5) zur Aufnahme eines Ausdrehkopfes, einer Frässpindel oder dergleichen zugewandt ist, durch eine Wand (42') verschlossen ist.

4. Werkzeugträger (1) nach irgendeinem der Patentansprüche 1 bis 3, **dadurch gekennzeichnet, dass** das Dämpfungsmittel (2) von der Rückseite des Werkzeugträgers (1) in dessen Aufnahme (3) angebracht wird, das heißt von der von der Hülse (5) zur Aufnahme eines Ausdrehkopfes, einer Frässpindel oder dergleichen abgewandten Seite, und durch einen Stopfen (6) in der genannten Aufnahme (3) gehalten wird.

5. Werkzeugträger (1) nach irgendeinem der Patentansprüche 1 bis 3, **dadurch gekennzeichnet, dass** das Dämpfungsmittel (2) von der Vorderseite des Werkzeugträgers (1) in diesem montiert wird, wobei es durch einen Stopfen (6) gehalten wird, der ebenfalls von seiner Vorderseite eingesetzt wird.

## Claims

1. Tool-holder (1) in the form of a boring head, clamp mandrel, milling tool-holder or the like, provided with a damping means (2) in the form of an elongate body arranged in an end housing (3) of the tool-holder (1), of corresponding form and dimension and provided with elastically deformable elements mounted on the damping means (2) and positioned between the jacket of the damping means (2) and the wall of the housing (3) of the tool-holder, **characterized in that** it comprises a device (4) for preventing excessive overheating of the damping means (2) likely to damage the elastically deformable elements mounted on the damping means (2) in an operation of mounting a tool by hooping, the device (4) for preventing overheating of the damping means (2) being positioned between the damping means (2) and the sleeve (5) of the tool-holder (1) intended to receive a tool such that the device (4) for preventing overheating produces a thermal insulation which entirely covers the damping means (2) in a plane perpendicular to the longitudinal axis of the tool-holder at the end of the damping means (2).

2. Tool-holder (1), according to Claim 1, **characterized in that** the device (4) for preventing excessive overheating of the damping means (2) is composed of a thermal insulation pad (41) extending in front of the end of the damping means (2) on the side of the latter situated close to the sleeve (5) for receiving a boring head, a milling tool-holder or the like.

3. Tool-holder (1), according to Claim 1, **characterized in that** the device (4) for preventing excessive overheating of the damping means (2) is composed of a receptacle (42) for housing the damping means (2), this receptacle being inserted into the housing (3) of the tool-holder (1) and being closed by a wall (42') at least on its side turned towards the sleeve (5) for receiving a boring head, a milling tool-holder or the like.

4. Tool-holder (1), according to any one of Claims 1 to 3, **characterized in that** the damping means (2) is mounted in the housing (3) of the tool-holder (1) through the rear face thereof, that is to say on the side opposite the sleeve (5) for receiving a boring head, a milling tool-holder or the like, and is retained in said housing (3) via a plug (6) .

5. Tool-holder (1), according to any one of Claims 1 to 3, **characterized in that** the damping means (2) is mounted in the tool-holder (1) through the front face thereof, said means being retained via a plug also introduced through the front face thereof.
